(19) Europäisches Patentamt
European Patent Office
Office européen des brevets

(11) Veröffentlichungsnummer : **0 022 970**
**B1**

(12) # EUROPÄISCHE PATENTSCHRIFT

(45) Veröffentlichungstag der Patentschrift : **01.06.83**

(51) Int. Cl.³ : **C 07 C 121/75**, C 07 C 67/14, A 01 N 53/00

(21) Anmeldenummer : **80103846.4**

(22) Anmeldetag : **07.07.80**

(54) **Stereoisomere von 2,2-Dimethyl-3-(2,2-dichlor-vinyl)-cyclopropan-1-carbonsäure-alpha-cyano-3-phenoxy-4-fluor-benzylestern, Verfahren zu ihrer Herstellung sowie ihre Verwendung als Insektizide und Akarizide.**

(30) Priorität : **18.07.79 DE 2928986**

(43) Veröffentlichungstag der Anmeldung : **28.01.81 Patentblatt 81/04**

(45) Bekanntmachung des Hinweises auf die Patenterteilung : **01.06.83 Patentblatt 83/22**

(84) Benannte Vertragsstaaten : **AT BE CH DE FR GB IT LI NL SE**

(56) Entgegenhaltungen :
**DE A 2 615 435**
**DE A 2 709 264**

**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Fuchs, Rainer, Dr.**
**Roeberstrasse 8**
**D-5600 Wuppertal-1 (DE)**
Erfinder : **Hammann, Ingeborg, Dr.**
**Belfortstrasse 9**
**D-5000 Köln 1 (DE)**
Erfinder : **Homeyer, Bernhard, Dr.**
**Obere Strasse 28**
**D-5090 Leverkusen 3 (DE)**
Erfinder : **Behrenz, Wolfgang, Dr.**
**Untergründemich 14**
**D-5063 Overath (DE)**
Erfinder : **Stendel, Wilhelm, Dr.**
**In den Birken 55**
**D-5600 Wuppertal-1 (DE)**

**EP 0 022 970 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Stereoisomere von 2,2-Dimethyl-3-(2,2-dichlor-vinyl)-cyclopropan-1-carbonsäure-α-cyano-3-phenoxy-4-fluorbenzylester, Verfahren zu ihrer Herstellung sowie ihre Verwendung als Insektizide und Akarizide

Die Erfindung betrifft neue Stereoisomere von 2,2-Dimethyl-3(2,2-dichlor-vinyl)-cyclopropan-1-carbonsäure-α-cyano-3-phenoxy-4-fluor-benzylester, ein Verfahren zu ihrer Herstellung sowie ihre Verwendung als Insektizide und Akarizide.

Es ist bereits bekannt, daß Gemische der (±)-cis- und (±)-trans-Formen von 2,2-Dimethyl-3-(2,2-dichlor-vinyl)-cyclopropan-1-carbonsäure-(±)-α-cyano-3-phenoxy-4-fluorbenzylester insektizid und akarizid wirksam sind (vergleiche DE-OS 2 709 264).

Es wurden die folgenden Stereoisomeren von 2,2-Dimethyl-3-(2,2-dichlorvinyl)-cyclopropan-1-carbonsäure-α-cyano-3-phenoxy-4-fluorbenzylester der Formel (I)

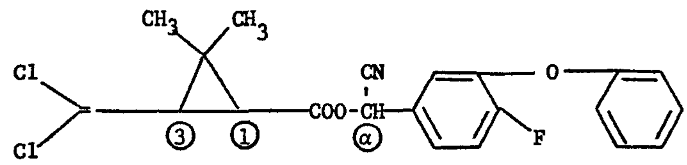

(I)

in welcher die asymmetrischen C-Atome ①, ③ und ⓐ folgende Konfiguration besitzen :

| Isomer | Absolute Konfiguration am Zentrum | | |
|---|---|---|---|
| | 1 | 3 | ⓐ |
| a | R | R | R/S |
| b | R | R | S |
| c | R | S | R/S |
| d | R | S | S |

gefunden.

Man erhält die Stereoisomeren der Formel (I) mit den unter a-d angegebenen Konfigurationen durch Umsetzung der entsprechend konfigurierten Säurechloride mit den entsprechend Konfigurierten Alkoholen in Anwesenheit von Säurebindemitteln und gegebenenfalls in Anwesenheit von Verdünnungsmitteln. Man erhält die Stereoisomeren außerdem durch an sich bekannte Trennungsmethoden der Stereoisomerengemische der Ester der Formel (I) (wie z. B. in Pestic. Sci. 1978, 9, S. 105-111 beschrieben).

Die neuen Stereoisomeren der Formel (I) mit den unter a-d angegebenen Konfigurationen zeichnen sich durch besonders hohe insektizide und akarizide Wirksamkeit aus.

Überraschenderweise zeigen die neuen Verbindungen eine erheblich höhere insektizide und akarizide Wirkung als die aus dem Stand der Technik bekannten Isomerengemische von 2,2-Dimethyl-3-(2,2-dichlor-vinyl)-cyclopropan-1-carbonsäure-α-cyano-3-phenoxy-4-fluor-benzylester. Dabei zeigen die einzelnen Stereoisomeren ein unterschiedliches Wirkungsspektrum.

Die bei der Herstellung der Stereoisomeren der Formel (I) ablaufende Reaktion kann z. B. durch folgendes Formelschema dargestellt werden :

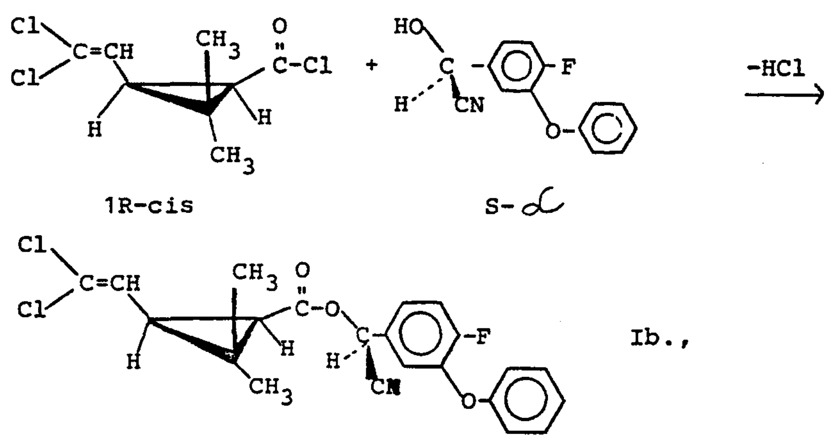


1R-cis

S-α

Ib.,

Die Herstellung der übrigen Isomeren der Formel I erfolgt analog hierzu.

Das als Ausgangsverbindung zu verwendende (1R)-cis bzw. (1R)-trans-2,2-Dimethyl-3-(2,2-dichlor-vinyl)-cyclopropan-1-carbonsäurechlorid (II) bzw. (III) kann aus der bekannten (1R)-cis bzw. (1R)-trans-2,2-Dimethyl-3-(2,2-dichlor-vinyl)-cyclopropan-1-carbonsäure = (+)-cis bzw. (+)-trans-2,2-Dimethyl-3-(2,2-dichlorvinyl)-cyclopropan-1-carbonsäure (vgl. Pestic Sci. 1974, 5, 791-799) nach üblichen Methoden, beispielsweise durch Umsetzung mit Thionylchlorid, gegebenenfalls in Gegenwart eines Verdünnungsmittels wie z. B. Tetrachlorkohlenstoff, bei Temperaturen zwischen 10 und 100 °C hergestellt werden.

Der als weitere Ausgangsverbindung einzusetzende 3-Phenoxy-4-fluor-benzaldehyd (II) ist bekannt (vgl. DE-OS 2 709 264).

Alkalicyanide, welche zur Herstellung der neuen Verbindungen eingesetzt werden, sind vorzugsweise Natriumcyanid und Kaliumcyanid.

Die als Ausgangsprodukte zur Herstellung der Verbindungen der Formel (I) mit den unter a-d angegebenen Konfigurationen zu verwendenen R-α-Cyano-3-phenoxy-4-fluor-benzyl- und S-α-Cyano-3-phenoxy-4-fluorbenzylalkohole sind neu. Der S-α-Cyano-3-phenoxy-4-fluorbenzylalkohol wird z. B. analog zu dem in DE-OS 2 902 466 beschriebenen Verfahren zur Herstellung des S-α-Cyano-3-phenoxybenzylalkohols hergestellt indem man den (R,S)-α-Cyano-3-phenoxy-4-fluor-benzylalkohol in Anwesenheit eines sauren Mittels mit dem Lacton der cis-2,2-Dimethyl-3S-(dihydroxy-methyl)-cyclopropan-1R-carbonsäure umsetzt, das so erhaltene Diastereomerengemisch chromatographisch auftrennt und das erhaltene (1R,5S)-6,6-Dimethyl-(4R)-[(S)-cyano-(3'-phenoxy-4-fluor-phenyl)-methoxy]-3-oxabicyclo [2.1.0] hexan-2-on sauer zum S-α-Cyano-3-phenoxy-4-fluorbenzylalkohol hydrolisiert.

Der R-α-Cyano-3-phenoxy-4-fluorbenzylalkohol wird analog hergestellt.

Der als Ausgangsprodukt einzusetzende (R,S)-α-Cyano-3-phenoxy-4-fluorbenzylalkohol ist bekannt (vgl. DE-OS 2 709 264).

Das Verfahren zur Herstellung der neuen Verbindungen (I) bzw. (IIa) und (IIb) wird vorzugsweise unter Verwendung von Verdünnungsmitteln durchgeführt. Als solche kommen praktisch alle inerten organischen Solventen in Frage. Hierzu gehören insbesondere aliphatische und aromatische, gegebenenfalls chlorierte Kohlenwasserstoffe, wie Pentan, Hexan, Heptan, Cyclohexan, Benzol, Toluol, Xylol, Methylenchlorid, Chloroform, Tetrachlorkohlenstoff, Chlorbenzol und o-Dichlorbenzol, Ether wie Diethyl- und Dibutylether, Tetrahydrofuran und Dioxan, Ketone wie Aceton, Methylethyl-, Methyl-isopropyl- und Methylisobutylketon sowie Nitrile wie Acetonitril und Propionitril.

Vorzugsweise werden von den oben genannten Lösungsmitteln die mit Wasser nicht mischbaren in Kombination mit Wasser als zweiter Solvenskomponente verwendet, d. h. das Verfahren wird in einem zweiphasigen Medium durchgeführt.

Hierbei können als Katalysatoren Verbindungen verwendet werden, welche gewöhnlich bei Reaktionen in mehrphasigen Medien als Hilfsmittel zum Phasentransfer von Reaktanden dienen. Insbesondere seien Tetraalkyl- und Trialkylaralkyl-ammoniumsalze, wie z. B. Tetrabutylammoniumbromid, Methyltrioctylammoniumchlorid und Trimethylbenzylammoniumhydrogensulfat genannt.

Die Reaktionstemperatur wird im allgemeinen zwischen 0 und 100 °C, vorzugsweise zwischen 10 und 50 °C gehalten. Das Herstellungsverfahren wird gewöhnlich bei Normaldruck durchgeführt.

Zur Durchführung des erfindungsgemäßen Verfahrens werden die Ausgangsstoffe gewöhnlich in äquimolaren Mengen eingesetzt. Ein Überschuß der einen oder anderen Reaktionskomponente bringt keine wesentlichen Vorteile. Die Umsetzung wird im allgemeinen in geeigneten Verdünnungsmitteln gegebenenfalls in Gegenwart eines Katalysators durchgeführt und das Reaktionsgemisch wird mehrere Stunden bei der erforderlichen Temperatur gerührt. Danach gibt man ein organisches Lösungsmittel wie z. B. Toluol, zu und arbeitet die organische Phase wie üblich durch Waschen, Trocknen und Abdestillieren des Lösungsmittels auf.

Die neuen Verbindungen der Formel (I) fallen in öliger Form an, und können nicht unzersetzt destilliert werden, jedoch durch sogenanntes « Andestillieren », d. h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient das $^{1}H$-NMR-Spektrum.

Die neuen Stereoisomeren der Formel (I) mit den unter a-d angegebenen Konfigurationen zeichnen sich, wie bereits erwähnt, durch hohe insektizide und akarizide Wirksamkeit aus.

Die Wirkstoffe eignen sich bei guter Pflanzenverträglichkeit und günstiger Warmblütertoxizität zur Bekämpfung von tierischen Schädlingen, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwichlungsstadien wirksam. Zu den oben erwähnten Schädlingen gehören :

Aus der Ordnung der Isopoda z. B. Oniscus asellus, Armadillidium vulgare, Porcellio scaber.

Aus der Ordnung der Diplopoda z. B. Blaniulus guttulatus.

Aus der Ordnung der Chilopoda z. B. Geophilus carpophagus, Scutigera spec.

Aus der Ordnung der Symphyla z. B. Scutigerella immaculata.

Aus der Ordnung der Thysanura z. B. Lepisma saccharina.

Aus der Ordnung der Collembola z. B. Onychiurus armatus.

Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z. B. Forficula auricularia.

Aus der Ordnung der Isoptera z. B. Reticulitermes spp..

Aus der Ordnung der Anoplura z. B. Phylloxera vastatrix, Pemphigus spp., Pediculus humanus

corporis, Haematopinus spp., Linognathus spp.

Aus der Ordnung der Mallophaga z. B. Trichodectes spp., Damalinea spp.

Aus der Ordnung der Thysanoptera z. B. Hercinothrips femoralis, Thrips tabaci.

Aus der Ordnung der Heteroptera z. B. Eurygaster spp., Dysdercus intermedius, Piesma quadrata, Cimex lectularius, Rhodnius prolixus, Triatoma spp.

Aus der Ordnung der Homoptera z. B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z. B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z. B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z. B. Diprion spp., Hoplocampa spp., Lasius spp., Monomorium pharaonis, Vespa spp.

Aus der Ordnung der Diptera z. B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z. B. Xenopsylla cheopis, Ceratophyllus spp.

Aus der Ordnung der Arachnida z. B. Scorpio maurus, Latrodectus mactans.

Aus der Ordnung der Acarina z. B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage : Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z. B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser ; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid ; als feste Trägerstoffe kommen in Frage : z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate kommen in Frage : z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel ; als Emulgier- und/oder schaumerzeugende Mittel kommen in Frage : z. B. nichtionogene und anionische Emulgatoren, wie Polyoxyäthylen-Fettsäure-Ester, Polyoxyäthylen-

Fettalkohol-Äther, z. B. Alkylarylpolyglykol-äther, Alkylsulfonate, Alkylsulfate, Arylsulfonate sowie Eiweißhydrolysate ; als Dispergiermittel kommen in Frage : z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,000 000 1 bis zu 100 Gew.-% Wirkstoff, vorzugsweise zwischen 0,000 1 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe eignen sich auch zur Bekämpfung von Ekto- und Endoparasiten auf dem veterinärmedizinischen Gebiet.

Die Anwendung der erfindungsgemäßen Wirkstoffe geschieht im Veterinärsektor in bekannter Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgießens (pour-on and spot-on) und des Einpuders sowie durch parenterale Anwendung in Form beispielsweise der Injektion.

## Herstellungsbeispiele

### Beispiel 1

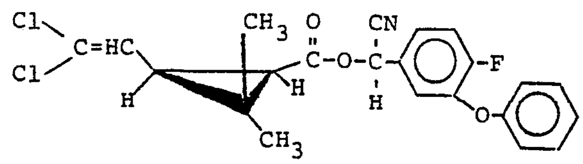

20,9 g (0,096 7 Mol) 3-Phenoxy-4-fluor-benzaldehyd und 22,0 g (0,096 7 Mol) (1R)-cis-2,2-Dimethyl-3-(2,2-dichlorvinyl)-cyclopropancarbonsäurechlorid werden unter Rühren bei 20-25 °C zu einer Mischung von 7,5 g Natriumcyanid, 11,5 ml Wasser, 300 ml n-Hexan und 2,5 g Tetrabutylammoniumbromid getropft und dann 4 Stunden bei 20-25 °C gerührt. Anschließend wird die Reaktionsmischung mit 400 ml Toluol versetzt und zweimal mit je 300 ml Wasser ausgeschüttelt. Die organische Phase wird abgetrennt, über Magnesiumsulfat getrocknet und das Lösungsmittel im Wasserstrahlvakuum abdestilliert. Letzte Lösungsmittelreste werden durch kurzes Andestillieren bei 60 °C/1 Torr Badtemperatur entfernt. Man erhält 37,4 g (89,1 % d. Th.) (1R)-cis-2,2-Dimethyl-3-(2,2-dichlorvinyl)-cyclopropancarbonsäure-(RS)-α-cyano-3-phenoxy-4-fluor-benzylester als zähes Öl, mit dem spezifischen Drehwert $[\alpha]_D^{20} = +7{,}7°$ (c = 2,0 in $CHCl_3$).

$^1$H-NMR-Spektrum ($CDCl_3$/TMS), δ (ppm)

Dimethyl-H : 1,0-1,3 (m/6H) ; Cyclopropan-H : 1,68-2,25 (m/2H) ; Vinyl-H : 6,08 (d/1H) ; benzyl-H : 6,21 (S/1/2H) u. 6,26 (S/1/2H) ; aromat.-H : 6,8-7,5 (m/8H).

Analog vorstehendem Beispiel erhält man : Beispiel 2 (1R)-trans-2,2-Dimethyl-3-(2,2-dichlor-vinyl)-cyclopropancarbonsäure-(R,S)-α-cyano-3-phenoxy-4-fluor-benzylester der Formel

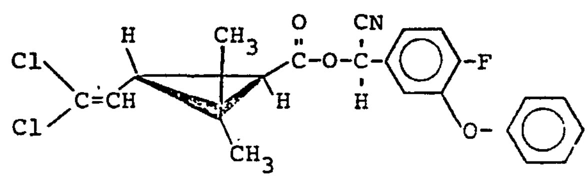

$[\alpha]_D^{20} = -8{,}7°$ (c = 2,0 in $CHCl_3$).

$^1$H-NMR-Spektrum ($CDCl_3$/TMS), γ (ppm)

Aromat.-H : 2,43-3,17 (m/8H) ; benzyl-H : 3,64 (S/1/2H) und 3,67 (S/1/2H) ; vinyl-H : 4,38 (α/1/2H) und 4,41 (α/1/2H) ; cyclopropan-H : 7,53-8,5 (m/2H) ; dimethyl-H : 8,6-8,9 (m/6H).

Beispiel 3

(1S)-cis-2,2-Dimethyl-3-(2,2-dichlor-vinyl)-cyclopropancarbonsäure-(R,S)-α-cyano-3-phenoxy-4-fluorbenzylester der Formel

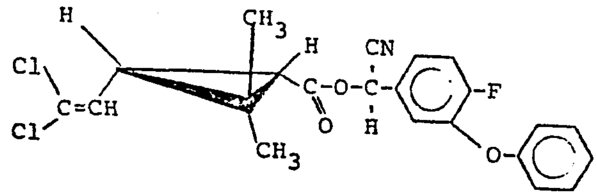

Beispiel 4

Trennung der α-R und α-S Diastereomeren von 1-R-Estern :

10 g cis-3-(2,2-Dichlorvinyl)-2,2-dimethyl-cyclopropan-1R-carbonsäure-α-(R,S)-cyano-3-phenoxy-4-fluorbenzylester werden einer präparativen Hochdruckflüssigkeitschromatographie unterworfen.

Säule : 23,4 mm × 250 mm, 7 μm Silicagel
Mobile Phase : 48 % n-Hexan, 47 % Cyclohexan, 5 % Diäthyläther
Durchflußmenge : 30 ml/min
Auftragsmenge : 100 mg
Trennzeit : Fraktion I : 8,5 min
Fraktion II : 9,5 min

Die beiden Fraktionen werden anschließend im Vakuum vom Lösungsmittel befreit.

Als Fraktion I erhält man 1,6 g
cis-3-(2,2-Dichlorvinyl)-2,2-dimethyl-cyclopropan-1R-carbonsäure-α(R)-cyano-3-phenoxy-4-fluorbenzylester als farbloses Öl.

$[\alpha]_D^{20} = -15{,}0°$ (C = 1,0 in $CHCl_3$)
$^1$H-NMR-Spektrum ($CDCl_3$/TMS) τ (ppm)
—CHCN : 3,72 (S/1H)
$CH_3$ : 8,70 (S/6H)
$CH_3$

Als Fraktion II erhält man 1,5 g
cis-3-(2,2-Dichlorvinyl)-2,2-dimethyl-cyclopropan-1R-carbonsäure-α(S)-cyano-3-phenoxy-4-fluorbenzylester als farblose Kristalle mit dem Schmelzpunkt : 50-52 °C.

$[\alpha]_D^{20} = +24{,}5°$ (c = 1,0 in $CHCl_3$)
$^1$H-NMR-Spektrum ($CDCl_3$/TMS), τ (ppm)
—CHCN : 3,68 (S/1H)
$CH_3$ : 8,72 (S/3H) u. 8,78 (S/3H).
$CH_3$

Beispiel A

$LD_{100}$-Test

Testtiere : Sitophilus granarius
Zahl der Testtiere : 25
Lösungsmittel : Aceton

2 Gewichtsteile Wirkstoff werden in 1 000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro m² Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden ; 0 % bedeutet, daß keine Testtiere abgetötet wurden.

Bei diesem Test zeigen z. B. die folgenden Verbindungen der Herstellungsbeispiele überlegene Wirkung gegenüber dem Stand der Technik : 1.

Beispiel B

$LT_{100}$-Test für Dipteren

Testtiere : Musca domestica (resistent) und Aëdes aegypti
Zahl der Testtiere : je 25
Lösungsmittel : Aceton

2 Gewichtsteile Wirkstoff werden in 1 000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Bei diesem Test zeigen z. B. die folgenden Verbindungen der Herstellungsbeispiele überlegene Wirkung gegenüber dem Stand der Technik : 1, 2.

Beispiel C

Grenzkonzentrations-Test/Bodeninsekten

Testinsekt : Phorbia antiqua-Maden (im Boden)
Lösungsmittel : 3 Gewichtsteile Aceton
Emulgator : 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigen z. B. die folgenden Verbindungen der Herstellungsbeispiele überlegene Wirkung gegenüber dem Stand der Technik : 1 und 2.

Beispiel D

Grenzkonzentrations-Test/Bodeninsekten

Testinsekt : Tenebrio molitor (im Boden)
Lösungsmittel : 3 Gewichtsteile Aceton
Emulgator : 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigen z. B. die folgenden Verbindungen der Herstellungsbeispiele überlegene Wirkung gegenüber dem Stand der Technik : 1 und 2

Beispiel E

Tetranychus-Test (resistent)

Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Spinnmilben abgetötet wurden ; 0 % bedeutet, daß keine Spinnmilben abgetötet wurden.

Bei diesem Test zeigen z. B. die folgenden Verbindungen der Herstellungsbeispiele überlegene Wirksamkeit gegenüber dem Stand der Technik : 1

Beispiel F

Test mit Lucilia cuprina res.-Larven

Lösungsmittel : 35 Gewichtsteile Ethylenglykolmonomethylèther
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^2$ Pferdefleisch und 0,5 ml der Wirkstoffzubereitung enthält. Nach 24 Stunden wird der Abtötungsgrad bestimmt.

Bei diesem Test zeigen z. B. die folgenden Verbindungen der Herstellungsbeispiele überlegene Wirkung gegenüber dem Stand der Technik : 1

Beispiel G

Test mit Boophilus microplus resistent

Lösungsmittel : 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die gewünschte Konzentration.

10 adulte Boophilus microplus res. werden in die zu testende Wirkstoffzubereitung 1 Minute getaucht. Nach Überführung in Plastikbecher und Aufbewahrung in einem klimatisierten Raum wird der Abtötungsgrad bestimmt.

Bei diesem Test zeigen z. B. die folgenden Verbindungen der Herstellungsbeispiele überlegene Wirkung gegenüber dem Stand der Technik : 1

Beispiel H

Plutella-Test

Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella maculipennis) besetzt, solange die Blätter noch feucht sind.

Nach der gewünschten Zeit wird die Abtötung in % bestimmt. Dabei bedeutet 100 %, daß alle Raupen abgetötet wurden ; 0 % bedeutet, daß keine Raupen abgetötet wurden.

Bei diesem Test zeigen z. B. die folgenden Verbindungen der Herstellungsbeispiele überlegene Wirksamkeit gegenüber dem Stand der Technik : 1

Beispiel I

Laphygma-Test

Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen des Eulenfalters (Laphygma frugiperda) besetzt, solange die Blätter noch feucht sind.

Nach der gewünschten Zeit wird die Abtötung in % bestimmt. Dabei bedeutet 100 %, daß alle Raupen abgetötet wurden ; 0 % bedeutet, daß keine Raupen abgetötet wurden.

Bei diesem Test zeigen z. B. die folgenden Verbindungen der Herstellungsbeispiele überlegene Wirksamkeit gegenüber dem Stand der Technik : 1

**Ansprüche**

1. Stereoisomere von 2,2-Dimethyl-3-(2,2-dichlorvinyl)-cyclopropan-1-carbonsäure-α-cyano-3-phenoxy-4-fluorbenzyl-ester der Formel (I)

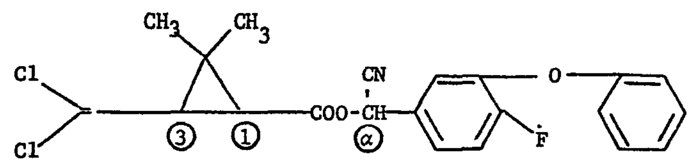

(I)

in welcher die asymmetrischen C-Atome ①, ③ und (α) folgende Konfiguration besitzen :

| Isomer | Absolute Konfiguration am Zentrum 1 | 3 | (α) |
|---|---|---|---|
| a | R | R | R/S |
| b | R | R | S |
| c | R | S | R/S |
| d | R | S | S |

2. Verfahren zur Herstellung der Verbindungen der Formel (I), dadurch gekennzeichnet, daß man die entsprechend konfigurierten Säurechloride mit den entsprechend konfigurierten Alkoholen in Anwesenheit von Säurebindemitteln und gegebenenfalls in Anwesenheit von Verdünnungsmitteln umsetzt.

3. Insektizide und akarizide Mittel, gekennzeichnet durch einen Gehalt an mindestens einem Stereoisomeren von 2,2-Dimethyl-3-(2,2-dichlorvinyl)-cyclopropancarbonsäure-α-cyano-3-phenoxy-4-fluorbenzylester der Formel I gemäß Anspruch 1.

4. Verwendung von Stereoisomeren von 2,2-Dimethyl-3-(2,2-dichlorvinyl)-cyclopropancarbonsäure-α-cyano-3-phenoxy-4-fluorbenzylester der Formel (I) gemäß Anspruch 1 zur Bekämpfung von Insekten und/oder Spinnentieren.

5. Verfahren zur Herstellung insektizider und/oder akarizider Mittel, dadurch gekennzeichnet, daß man Stereoisomere von 2,2-Dimethyl-3-(2,2-dichlorvinyl)-cyclopropancarbonsäure-α-cyano-3-phenoxy-4-fluorbenzylester der Formel (I) gemäß Anspruch 1 mit Streckmitteln und/oder oberflächenaktiven Mitteln vermischt.

**Claims**

1. Stereoisomers of 2,2-dimethyl-3-(2,2-dichlorovinyl)-cyclopropane-1-carboxylic acid α-cyano-3-phenoxy-4-fluorobenzyl ester of the formula (I)

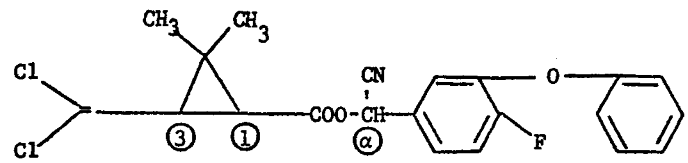

(I)

in which the asymmetric C atoms ①, ③, and ⓐ have the following configuration :

| Isomer | Absolute configuration at the centre | | |
|---|---|---|---|
| | 1 | 3 | ⓐ |
| a | R | R | R/S |
| b | R | R | S |
| c | R | S | R/S |
| d | R | S | S |

2. Process for the preparation of the compounds of the formula (I), characterised in that the acid chlorides having the corresponding configurations are reacted with the alcohols having the corresponding configurations, in the presence of acid-binding agents and if appropriate in the presence of diluents.

3. Insecticidal and acaricidal compositions, characterised in that they contain at least one stereoisomer of 2,2-dimethyl-3-(2,2-dichlorovinyl)-cyclopropane-1-carboxylic acid α-cyano-3-phenoxy-4-fluorobenzyl ester of the formula I according to Claim 1.

4. Use of stereoisomers of 2,2-dimethyl-3-(2,2-dichlorovinyl)-cyclopropane-1-carboxylic acid α-cyano-3-phenoxy-4-fluorobenzyl ester of the formula (I) according to Claim 1 for combating insects and/or arachnidae.

5. Process for the preparation of insecticidal and/or acaricidal compositions, characterised in that stereoisomers of 2,2-dimethyl-3-(2,2-dichlorovinyl)-cyclopropane-1-carboxylic acid α-cyano-3-phenoxy-4-fluorobenzyl ester of the formula (I) according to Claim 1 are mixed with extenders and/or surface-active agents.

**Revendications**

1. Stéréo-isomères de 2,2-diméthyl-3-(2,2-dichlorovinyl)-cyclopropane-1-carboxylate d'α-cyano-3-phénoxy-4-fluorobenzyle de formule (I)

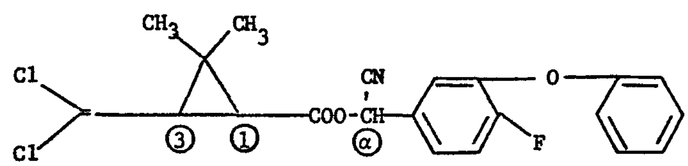

(I)

dans laquelle les atomes C asymétriques ①, ③ et ⓐ possèdent la configuration suivante :

| Isomère | Configuration absolue du centre | | |
|---|---|---|---|
| | 1 | 3 | ⓐ |
| a | R | R | R/S |
| b | R | R | S |
| c | R | S | R/S |
| d | R | S | S |

2. Procédé pour la fabrication des composés de formule (I), caractérisé en ce que l'on fait réagir les chlorures d'acides de configuration correspondante avec les alcools de configuration correspondante, en présence d'accepteurs d'acides et, éventuellement, en présence de diluants.

3. Agents insecticides et acaricides, caractérisés en ce qu'ils contiennent au moins un stéréo-isomère de 2,2-diméthyl-3-(2,2-dichlorovinyl)-cyclopropanecarboxylate d'α-cyano-3-phénoxy-4-fluorobenzyle de formule I selon la revendication 1.

4. Utilisation de stéréo-isomères de 2,2-diméthyl-3-(2,2-dichlorovinyl)-cyclopropanecarboxylate d'α-cyano-3-phénoxy-4-fluorobenzyle de formule (I) selon la revendication 1, pour la lutte contre les insectes et/ou araignées.

5. Procédé pour la fabrication d'agents insecticides et/ou acaricides, caractérisé en ce que l'on mélange des stéréoisomères de 2,2-diméthyl-3-(2,2-dichlorovinyl)-cyclopropanecarboxylate d'α-cyano-3-phénoxy-4-fluorobenzyle de formule (I) selon la revendication 1, avec des diluants et/ou des agents tensioactifs.